# EUROPEAN PATENT SPECIFICATION

(11) **EP 3 727 823 B1**
(45) Date of publication and mention of the grant of the patent: **26.04.2023**
(21) Application number: 18833533.5
(22) Date of filing: 18.12.2018
(51) Int. Cl.: B29D 30/24, B29D 30/26, B29D 30/06

(54) **DRUM FOR THE APPLICATION OF SEMI-FINISHED PRODUCTS WITHIN TYRES FOR VEHICLE WHEELS, AND APPLICATION PROCESS WHICH CAN BE IMPLEMENTED WITH SAID DRUM**
TROMMEL ZUM AUFTRAGEN VON HALBZEUGEN IN REIFEN FÜR FAHRZEUGRÄDER UND MIT BESAGTER TROMMEL IMPLEMENTIERBARES AUFTRAGSVERFAHREN
TAMBOUR POUR L'APPLICATION DE PRODUITS SEMI-FINIS DANS DES PNEUMATIQUES POUR ROUES DE VÉHICULE, ET PROCÉDÉ D'APPLICATION POUVANT ÊTRE MIS EN OEUVRE AVEC LEDIT TAMBOUR

(30) Priority: 21.12.2017 IT 201700148231
(43) Date of publication of application: 28.10.2020
(73) Proprietor: Pirelli Tyre S.p.A., 20126 Milano (IT)
(72) Inventor: DE COL, Christian, 20126 Milano (IT); AMURRI, Cesare Emanuele, 20126 Milano (IT); MANCINI, Gianni, 10141 Torino (IT)
(74) Representative: Tansini, Elio Fabrizio
(86) International application number: PCT/IB2018/060221
(87) International publication number: WO 2019/123226

(56) References cited:
- WO-A1-2015/194940
- WO-A1-2016/157001

## Description

The present invention relates to a drum for the application of semi-finished products within tyres for vehicle wheels. The invention also relates to a process for the application of semi-finished products within tyres for vehicle wheels, which can be implemented by means of said drum.

In particular, in an embodiment described herein, the invention lends itself to being used in the production of self-sealing tyres, to perform the application of a self-sealing sleeve within a tyre being processed. The invention can, however, also be implemented for the application of other types of semi-finished products, for example liner, underliner, sensors and/or supporting elements thereof.

Self-sealing tyres are puncture-resistant tyres because they contain a self-sealing layer applied to the radially inner surface of the tyre, which automatically seals any holes produced by the accidental penetration of nails, screws or other sharp bodies through the tyre.

The production cycles of a tyre involve producing and/or assembling the various components of a tyre, thus obtaining a green tyre and subsequently subjecting the green tyre to a moulding and vulcanisation process adapted to define the structure of the tyre according to a desired geometry and tread pattern.

The term "semi-finished product" means a component of the tyre formed as an annular sleeve, for example cylindrical, by assembling one or more components that are the same or different from each other.

In a preferred embodiment, the semi-finished product is a self-sealing sleeve to be applied within a tyre. Alternatively, the semi-finished product may be represented, for example, by a liner or by a liner+underliner assembly to be applied within a carcass ply, or by a carcass structure or other component to be applied within a crown structure.

The term "self-sealing sleeve" refers to an assembled semi-finished product having a cylindrical shape designed to be the self-sealing layer within a tyre.

By "cylindrical conformation" both of the self-sealing sleeve and of a drum bearing it, it is meant both a cylindrical conformation having a straight generatrix and a slightly convex conformation having a convex generatrix.

The terms "radial" and "axial" and the expressions "radially inner/outer" and "axially inner/outer" are used with reference to the radial/axial direction of the drum, a semi-finished product or the tyre (or a portion thereof) to which the semi-finished product is applied, i.e. a direction perpendicular/parallel to a geometric axis of the drum itself which, during application, coincides with the rotation axis of the tyre and of the semi-finished product applied thereto.

The terms "circumferential" and "circumferentially" are used with reference to the annular development of the drum, a semi-finished product or the tyre (or a portion thereof).

"Axial middle line plane" means a plane perpendicular to the geometric axis of the tyre, or of a drum used in the construction thereof, and equidistant from the axially outer portions of the tyre or the drum itself.

By "substantially continuous", where referred to a deposition surface of a drum, it is meant that at least in the axial middle line plane, said deposition surface has a substantially constant radial distance from the geometric axis of the drum, with possible variations not exceeding 3 mm.

By "self-sealing material" it is meant a polymeric material provided, after the vulcanisation of the tyre, with viscoelastic and tackiness features such as to allow the material to flow inside a perforation caused by a sharp element and to adhere and be dragged by said moving sharp element. Such polymeric material may for example comprise a synthetic or natural elastomer, an elastomeric block copolymer, process oil, at least one tackifying agent, and at least one reinforcing filler.

By the generic term "tyre", when not further specified, it is meant both a green tyre being processed comprising at least one carcass structure having at least one toroidally shaped carcass ply having its axially opposed end flaps associated with respective bead cores and forming a pair of beads, and a green tyre, and a moulded and vulcanised tyre.

By "green tyre" it is meant a tyre at the end of the building process which is not yet subjected to a moulding and vulcanisation process.

By "aspect ratio" it is meant a ratio expressed as a percentage between the height of the sidewall of the tyre in radial section and the width in radial section from sidewall to sidewall of the tyre itself.

Document US2009/0205765 describes a method for producing a self-sealing tyre wherein it is provided to arrange a vulcanised tyre and form a sealing band by extruding a self-sealing material on a laminar support. The sealing band is wound in a spiral to be introduced into the vulcanised tyre.

EP3009260 describes a self-sealing tyre comprising a sealing layer obtained by spiralling a sealing material directly onto the radially inner surface of the vulcanised tyre rotated about the axis thereof. In particular, the vulcanised tyre is mounted on a rotating actuation device while a nozzle mounted at the outlet of an extruder is inserted within the tyre. The sealing material is extruded from the extruder and deposited on the surface of the tyre through the nozzle.

WO2011/064698 relates to a method for selectively controlling the self-sealing capacity of a tyre obtained by affixing a sealing compound on a drum and subsequently forming a precursor of a green tyre thereon including liner and carcass, and subsequent shaping, moulding and vulcanisation.

The Applicant has observed that in the case of US2009/0205765 and EP3009260, it is provided to operate on vulcanised tyres which provide the structural stability necessary for the application of the sealing layer according to the specific methods described herein.

WO 2016/157001 A1 relates to an expandable forming drum for building tyres, comprising circumferentially consecutive sectors that are radially movable between a contracted condition and an expanded condition in which the sectors define a radially external abutment surface. Each sector has circumferentially opposite coupling portions, each comprising circumferential projections alternated with circumferential cavities. The projections of each sector are slidably engaged in the respective cavities of circumferentially adjacent sectors.

WO 2015/194940 A1 relates to a tire building drum typically used to receive tire components, in particular breaker and tread packages, for tire building. The drum provides a circumferential surface for receiving a tire component, defined by segments which are movable between contracted position in which the circumferential surface has a first radius and an expanded position in which the segments are spaced apart and in which the circumferential surface has a second, greater radius. Cover plates are provided for spanning the spaced apart segments. The Applicant has further observed that the application of the sealing layer after vulcanisation may result in poor adhesion between the sealing layer and the tyre, for example due to the presence of impurities on the inner surface of the tyre, and a lengthening of production times, for example in the case in which a specific subsequent heat treatment is required.

The Applicant has verified that current production requirements require maximum grade of flexibility at any stage of the process and that even limiting the application of the sealing layer to a post-vulcanisation step would limit the possibilities of adapting the building process and the layout of the building plant to the individual production requirements.

With a view to providing maximum flexibility both in terms of process and in terms of structural and plant components, the Applicant has evaluated the possibility of building the sealing layer as the first component of a green tyre, as described in WO2011/064698, but has verified that this attempt introduces an additional process variable, requiring specific technical measures that do not improve the operational flexibility of the process and/or the plant.

The Applicant has therefore perceived the importance of releasing as much as possible the step of application of the sealing layer from the specific building process to increase the flexibility of the building process and/or the building plant.

The Applicant has understood that by making a self-sealing sleeve as well as a semi-finished product of a different type in a manner completely independent of the type of building process and plant of the tyre, it is possible to apply such a semi-finished product to any type of green tyre being processed, green or moulded and vulcanised, obtained by any building process carrying out a radial expansion of the sleeve within the tyre until it adheres internally to the tyre itself.

However, the Applicant has observed that in a built tyre, the difference existing between the fitting diameter detectable at the beads and the inner diameter detectable near the axial middle line plane may be an obstacle to an easy insertion of a semi-finished product in the form of a cylindrical sleeve and/or its subsequent application against the inner surface of the tyre itself at the crown portion. In fact, the beads lend themselves to interfere with the semi-finished product during its introduction into the tyre. Furthermore, it is necessary to ensure the correct adhesion of the semi-finished product against the inner surfaces of the tyre which, especially in the shoulder areas, does not offer ample room for manoeuvring. The significant difference between the minimum detectable diameter at the beads and the inner diameter detectable near the crown zone also imposes significant radial and circumferential expansion to the semi-finished product, especially during the processing of tyres having a relatively high aspect ratio, for example equal to or greater than 50.

Finally, the Applicant has found that the application of a semi-finished product in the form of a cylindrical sleeve within a tyre, whether green being processed, green or already moulded and vulcanised, is facilitated by using a drum provided with radially expandable sectors provided with circumferential extensions, each of which interacts with the adjacent sector so that the deposition surface around which the semi-finished product is applied may also significantly increase its diameter, while retaining a substantially continuous circumferential development throughout the radial expansion, up to application of the semi-finished product against the inner surface of the tyre.

More precisely, according to a first aspect, the invention relates to a drum for the application of semi-finished products within tyres for vehicle wheels, comprising a central support core defining a geometric axis of the drum.

Preferably, a plurality of sectors distributed along a circumferential direction around said geometric axis is provided. Preferably, driving devices are provided, operating between the central core and each sector in order to cause a radial translation of the sectors moving away from the central core from a contracted position, in which said sectors define a substantially continuous radially outer deposition surface, towards an expanded position.

Preferably, each sector has a fastening body having a radially outer surface and coupling members for coupling with said driving devices.

Preferably, said plurality of sectors has guide seats formed each at the fastening body of a respective sector, in a radially inner position with respect to the radially outer surface.

Preferably, said plurality of sectors has laminar extensions, each of which extends along said circumferential direction from the fastening body of a respective sector and has, on a side opposite to the fastening body, a terminal portion slidably engaged through the guide seat of one of the circumferentially contiguous sectors.

According to a further aspect, the invention relates to a process for the application of a semi-finished product within a tyre. Preferably, it is provided to arrange, in a radially contracted condition, a drum having a radially outer deposition surface defined by sectors distributed along a circumferential direction about a geometric axis.

Preferably, a maximum outer diameter of the drum in said radially contracted condition is smaller than a minimum inner diameter of a tyre.

Preferably, it is provided to apply said semi-finished product around the drum deposition surface.

Preferably, it is provided to axially insert, within the tyre, the drum carrying the semi-finished product.

Preferably, it is provided to radially expand the drum up to a radially expanded condition in order to apply the semi-finished product against a radially inner surface of the tyre.

Preferably, in the radially contracted condition, said plurality of sectors has laminar extensions extending along said circumferential direction and each slidably inserted with a terminal portion thereof through a guide seat carried by one of the circumferentially contiguous sectors in radially inner position with respect to the deposition surface.

Preferably, the action of radially expanding the drum comprises slidably extracting the laminar extensions from the respective guide seats in order to maintain the deposition surface according to a substantially continuous extension.

The Applicant believes that the use of the sliding laminar extensions promotes the maintenance of an adequate supporting action of the semi-finished product during the entire drum expansion cycle, even when the transition between the contracted condition and the expanded condition requires a considerable radial excursion of the sectors.

The semi-finished product initially applied to the drum therefore finds adequate support over its entire circumferential development, not only during the application when the drum is contracted, but also during the entire radial expansion until it comes into contact with the inner surfaces of the tyre.

When it comes into contact with the inner surfaces of the tyre, the semi-finished product may therefore exhibit a continuous circular development that adequately copies the development of the inner surfaces of the tyre, so as to prevent the formation of undesired air pockets between the same semi-finished product and the tyre in the mutual coupling step.

The progressive extraction of the laminar extensions during the radial expansion of the drum also allows the sectors to correctly support the semi-finished product up to the achievement of the semi-finished product application against the inner surfaces of the tyre, independently of the circumferential dimensions of the latter. Consequently, the same drum can be used for the processing of a wide range of tyres having different dimensions both in relation to the fitting diameter to the beads, and in relation to the inner diameter near the axial middle line plane. The individual sectors also lend themselves to being easily engaged and disengaged with respect to each other and from the driving devices so as to allow, if necessary, an easy replacement of the sectors themselves to set the drum also for the processing of a range of tyres with different widths.

In at least one of the above aspects, the invention further comprises one or more of the following preferred features. Preferably, each sector has a fastening body and at least one laminar extension.

Preferably, said sectors are identical to each other.

It is thus possible to achieve a simplification of implementation and a reduction in costs.

Preferably, first sectors and second sectors respectively different from one another are provided, distributed alternately respectively, along the circumferential direction.

Preferably, each of the first sectors has two laminar extensions, extending from the respective fastening body along the circumferential direction in opposite directions, respectively. Preferably, in each of the second sectors, at least one of the guide seats is provided, which slidably engages the terminal portions of the laminar extensions belonging to one of the first circumferentially adjacent sectors.

Preferably, each of the first sectors engages each of its own laminar extensions in one of the two second circumferentially adjacent sectors.

Preferably, each of the second sectors engages two laminar extensions, each belonging to one of the first two circumferentially adjacent sectors.

Preferably, each laminar extension and the fastening body of the respective sector have respective radially outer surfaces extending in mutual continuity relationship.

This gives the deposition surface a greater regularity, facilitating the correct deposition of the semi-finished product.

Preferably, a minimum detectable radial distance between each guide seat and the radially outer surface of the fastening body, at least in the proximity of a circumferential end edge of the fastening body itself, is less than about 3 mm.

Preferably, said minimum radial distance is between about 0.2 mm and about 2 mm.

Preferably, at the deposition surface, the sector has an anti-stick surface with low friction coefficient.

Preferably, each sector has a coating layer of low friction coefficient material at the drum deposition surface.

The low friction coefficient facilitates the sliding of the semi-finished product on the deposition surface during the expansion of the drum, limiting the risk of jamming and/or extreme overstressing of the semi-finished product itself.

Preferably, the laminar extension, in the absence of mechanical stresses, has a circumferential extension curved according to a radius greater than a radius of curvature of the deposition surface in the expanded condition.

This circumstance allows retaining a condition of elastic preload, in particular bending, in the laminar extension in the assembled drum.

Preferably, the laminar extension is engaged in the respective guide seat in an elastic bending condition.

Preferably, the laminar extension exerts an elastic thrust action against the respective guide seat directed radially outwardly. Therefore, a constant contact of the laminar extension against the guide seat is promoted, to the advantage of the geometric accuracy of the deposition surface.

Preferably, the laminar extension is engaged in the respective guide seat in an elastic bending condition towards the geometric axis of the drum.

The condition of elastic preload induced on the laminar extension allows effectively counteracting centripetal thrust actions exerted by the semi-finished product as a result of the radial expansion. Preferably, each laminar extension has at least one thickness reduction at at least one of the circumferentially opposite ends thereof.

The elastic deformability of the laminar extension is thus favoured, and/or the insertion of the laminar extension into the respective guide seat is facilitated, at least during assembly. Preferably, each laminar extension has at least one thickness reduction at the proximal end thereof with respect to the fastening body of the respective sector.

Preferably, each laminar extension has at least one thickness reduction at a distal end thereof with respect to the fastening body of the respective sector.

The reduced thicknesses at the ends of the laminar extension facilitate the insertion and sliding thereof within the guide seat, thus promoting the continuity and regularity of the circumferential development of the deposition surface. Preferably, each sector has a pair of lateral expansions defining respective axially opposite ends of the deposition surface at the fastening body.

Preferably, said lateral expansions are axially opposite with respect to an axial middle line plane of the drum.

Preferably, the lateral expansions are symmetrical with respect to the axial middle line plane.

Preferably, each laminar extension has a proximal end axially interposed between said lateral expansions.

Preferably, each of the lateral expansions has a larger radial dimension than a radial dimension of the laminar extension. Preferably, each guide seat is axially limited between the lateral expansions of the respective fastening body.

Preferably, the lateral expansions each have a curvilinear profile connecting portion leading to a radial axial delimitation surface of the respective sector.

The processing of semi-finished products having a width greater than that of the deposition surface, even structurally fragile, is thus facilitated without the axially outer edges of the drum being able to affect and/or damage the semi-finished product following the radial expansion of the drum.

Preferably, said coupling members engage the respective sectors at the axial expansions.

The structural strength of the sector at the coupling members is thus favoured. It is also prevented to condition the axial dimension of the laminar extensions to avoid mechanical interference with the coupling members.

Preferably, the fastening body also has a base portion joined on sides respectively opposite the lateral expansions.

Preferably, the base portion extends in a radially inner position with respect to the laminar extension.

Preferably, each guide seat is defined between said base portion and a radially inner surface of the respective laminar extension. Preferably, said coupling members operate at the base portion. Preferably, the coupling members comprise threaded elements each having a head housed arranged in a recess provided in the base portion, and a stem passing through the base portion.

The guide seat is therefore free from the dimensions of the coupling members, which could interfere mechanically with the sliding of the laminar extension.

Preferably, the fastening body and the laminar extension of each sector are made of a single monolithic piece, integrating said guide seat.

Preferably, the fastening body and the laminar extension of each sector are made of a single monolithic piece, produced by additive production.

Preferably, the fastening body and the laminar extension of each sector are made in a single monolithic piece, made by fused deposition modelling (FDM).

Preferably, the fastening body and the laminar extension of each sector are made of a single monolithic polyetherimide piece.

The use of additive production techniques, in particular by means of molten polyetherimide deposition, allows the attainment of low-cost sectors of different shapes and sizes, having adequate structural strength and elasticity.

Preferably, the driving devices comprise, for each sector, at least one pusher slidably guided in radial direction with respect to the central core.

Preferably, the pusher is movable along at least one guide element extending radially from the central core.

Preferably, telescopic interconnecting rods are also provided between each guide element and each pusher.

Preferably, the guide elements are carried by a support disc integral with the central core, in proximity to an axial middle line plane of the drum.

Preferably, during the radial expansion of the drum, the terminal portions of the laminar extensions exert a radially outwardly directed elastic thrust action.

Preferably, centripetal thrust actions exerted by the semi-finished product against the deposition surface in the expanded condition are at least partially opposed by the elastic thrust action exerted by the laminar extensions.

Preferably, it is also provided to exert the action of opposing centripetal thrust actions exerted by the semi-finished product in the expanded condition by means of the elastic thrust action exerted by the laminar extensions.

Preferably, the semi-finished product is applied against the radially inner surface of the tyre, with an outwardly radial thrust action, distributed according to the entire circumferential extension of a radially outer surface of the semi-finished product itself.

Further features and advantages of the invention will become clear from the following description of a drum for the application of semi-finished products within tyres for vehicle wheels and an application process that can be implemented by said drum. Such a description is shown below by way of a non-limiting example with reference to the accompanying figures, in which:
figure 1 shows a diametrical section of a drum according to the present invention, carrying a semi-finished product in the form of a cylindrical sleeve ready to be inserted within a tyre;
Figure 2 shows the drum during the insertion of the semi-finished product within the tyre;
figure 3 shows the drum-semi-finished-product-tyre assembly at the end of the application of the semi-finished product within the tyre;
figure 4 shows a lateral, partially sectional view of some of the sectors of the drum in the contracted condition of figures 1 and 2;
figure 5 shows the sectors of the drum in figure 4 in the expanded condition;
figure 6 shows a perspective view of some sectors of the drum in the expanded condition;
figure 7 is a representation similar to figure 5 of the sectors according to a possible embodiment variant of the invention;

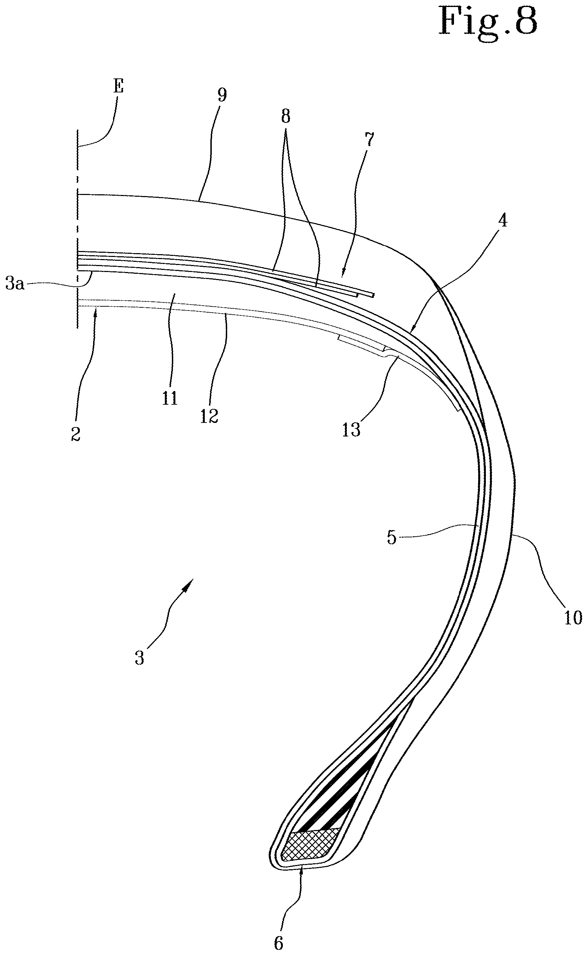

figure 8 shows a tyre provided with a semi-finished product which can be applied by means of the subject drum.

With reference to the aforementioned figures, reference numeral 1 indicates as a whole a drum for the application of semi-finished products within tyres for vehicle wheels, according to the present invention.

The drum 1 is adapted to be used to apply at least one semi-finished product 2 within a tyre 3. In the example described, the tyre 3 has already completed the building cycle, and has a carcass structure 4 comprising at least one carcass ply 5 having end flaps engaged, for example by turning up, around respective anchoring portions 6 in the areas usually identified as "beads". The carcass structure 4 is associated, in a radially outer position, to a crown structure 7 comprising one or more belt layers 8 and a tread band 9 which defines a radially outer surface of the tyre. A pair of sidewalls 10 each extend from an axially outer edge of the tread band 9 up to the vicinity of the respective anchoring portion 6, to externally cover the axially opposite sides of the carcass structure 4.

The tyre 3 is preferably in the green state, but may also be vulcanised before receiving the semi-finished product 2.

According to possible embodiments, the application of the semi-finished product 2 may be carried out in the carcass structure 4 shaped toroidally when the tyre 3 is in an intermediate step of its building, before or after the application of the belt layers 8.

The semi-finished product 2 is preferably made in the form of a cylindrical sleeve. The semi-finished product 2 may comprise a layer of self-sealing material 11 possibly arranged on a protective film 12, for example made of thermoplastic material such as polyamide or polyester.

The axially opposite circumferential edges of the protective film 12 may be engaged with annular sealing inserts 13, for example in the form of strips of elastomeric material, having a function of containment of the self-sealing material 11 between the protective film 12 and a radially inner surface 3a of the tyre 3. The drum 1 comprises a central core 14 defining a geometric axis X of the drum 1 itself.

The central core 14 preferably comprises a tubular shaft 15 longitudinally crossed by a control screw 16 having a pair of threads 16, 16b, respectively right-handed and left-handed, axially symmetrical to each other.

Each of the threads 16a, 16b engages a respective nut 17 which, through one or more longitudinal slots 15a formed in the tubular shaft 15, is made integral with a respective slider 18 movable along the tubular shaft itself.

The control screw 16 is rotatably housed in the tubular shaft 15, so that at rotations of the screw correspond to axial translations of the sliders 18, in reciprocal approach and distancing.

The drum 1 further comprises a plurality of sectors 19 distributed around the geometric axis X along a circumferential direction.

In a preferred embodiment, each sector 19 has a fastening body 20 having a radially outer surface 20a. The fastening body 20 has a guide seat 21, obtained in a radially inner position with respect to the radially outer surface 20a, at short distance therefrom. Preferably, a minimum detectable radial distance H between the guide seat 21 and the radially outer surface 20a of the fastening body 20, at least in the proximity of a circumferential end edge 20b of the fastening body 20 itself, is less than about 3 mm, preferably between about 0.2 mm and about 2 mm.

Each sector 19 may also be associated with at least one laminar extension 22, which extends from the fastening body 20 along the circumferential direction. Each laminar extension 22 has a radially outer surface 22a extending in continuity relation with the radially outer surface 20a of the fastening body 20. On the opposite side with respect to the fastening body 20, each laminar extension 22 has an end portion 23 slidably engaged through the guide seat 21 belonging to the fastening body 20 of a circumferentially adjacent sector 19.

The set of radially outer surfaces 20a, 22a, belonging to the fastening bodies 20 and to the laminar extensions 22 of the sectors 19 consecutively arranged, defines a substantially continuous deposition surface S.

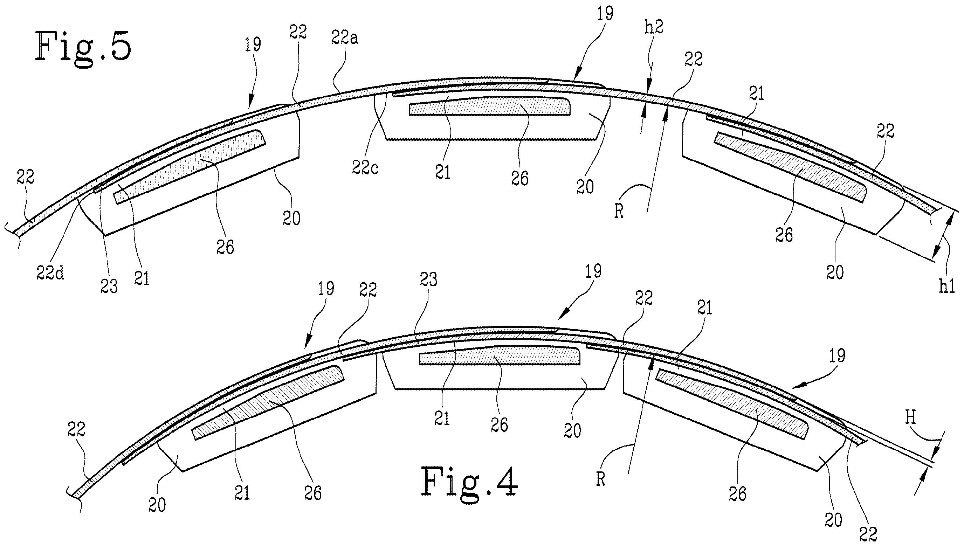

The sectors 19 may be identical and consecutively aligned along the circumferential direction according to a complete revolution about the geometric axis X, as better represented in figures 4 to 6.

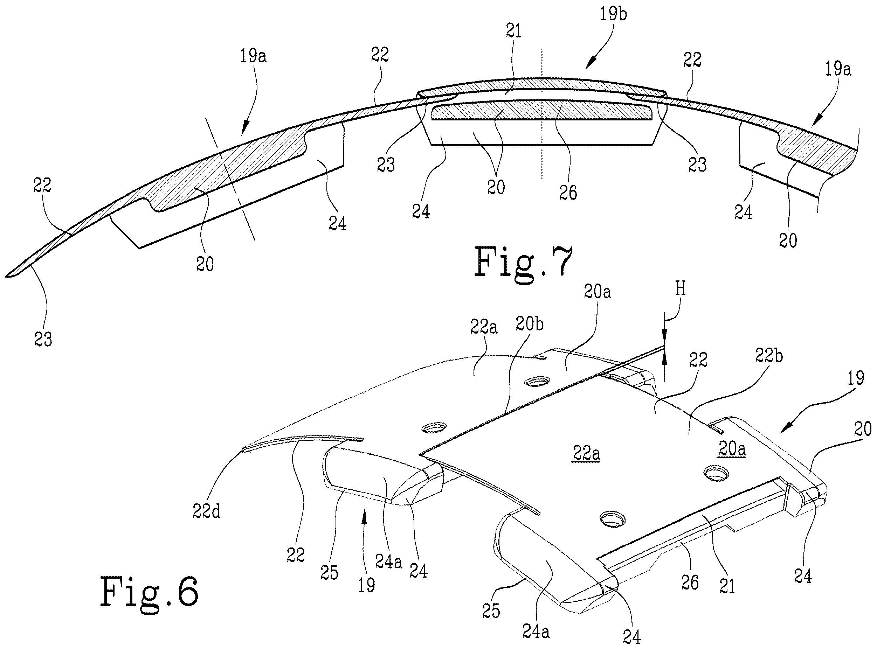

In a different preferential embodiment, shown schematically in figure 7, first and second sectors 19a, 19b respectively different are identified, distributed in sequence or alternately along the circumferential direction, respectively. Each of the first sectors 19a may have two laminar extensions 22 extending along the circumferential direction in opposite directions, respectively, from the respective fastening body 20. In each of the second sectors 19b at least one of the guide seats is provided, which slidably engages the end portions 23 of the laminar extensions 22, each belonging to one of the first circumferentially adjacent sectors 19a. In other words, each of the first sectors 19a engages each of its own laminar extensions 22 in one of the two second circumferentially adjacent sectors 19b. Each of the second sectors 19b in turn engages two laminar extensions 22, each belonging to one of the first two circumferentially adjacent sectors 19a.

Preferably, in each sector 19 the guide seat 21 is axially bounded between a pair of lateral expansions 24, axially opposite and symmetrical with respect to an axial middle line plane E of the drum 1. The lateral expansions 24 define respective axially opposite ends of the deposition surface S, at the fastening body 20.

In a preferred embodiment, each laminar extension 22 has its own proximal end 22b axially interposed between the lateral expansions 24.

The lateral expansions 24 each have a curvilinear profile portion 24a, each in an axially outer position, leading to a radial axial delimitation surface 25 of the respective sector 19.

The lateral expansions 24 preferably have a radial dimension h1 greater than a radial dimension h2 of the laminar extension 22, so as to project radially with respect to the latter, towards the geometric axis X.

In each sector 19, a base portion 26 of the fastening body 20 is joined on respectively opposed sides to the lateral expansions 24, in a radially inner position with respect to the laminar extension 22. The guide seat 21 is therefore defined between the base portion 26 and a radially inner surface 22c of the respective laminar extension 22.

Coupling members 27 operating at the fastening body 20 engage each sector 19, preferably in a fixed manner, with driving devices 28 operatively interposed between the central core 14 and each sector 19, for determining a radial translation of the sectors with respect to the central core 14.

For example, the coupling members 27 may comprise threaded elements each having a head 27a housed in a recess provided in the respective base portion 26, and a stem 27b passing through the base portion 26 itself to engage the driving devices 28. According to a possible alternative, the coupling members 27 may engage the respective sectors 19 at the lateral expansions 24, rather than at the base portion 26 which extends therebetween.

It is preferably provided that in the absence of mechanical stresses, for example when the respective sector 19 is released from the drum, each laminar extension 22 exhibits an arched circumferential development, according to a radius greater than a radius of curvature R according to which the deposition surface S, in a condition of maximum expansion of the drum, is curved around the geometric axis X.

Each laminar extension 22 is therefore engaged in the respective guide seat 21 in an elastic deformation condition. More precisely, the laminar extension 22 is engaged in the respective guide seat 21 in an elastic bending condition towards the geometric axis X of the drum. Consequently, the laminar extension 22 exerts an elastic thrust action against the respective guide seat 21 directed radially outwardly.

Moreover, it is preferably provided that each laminar extension 22 has at least one thickness reduction at at least one of the circumferentially opposite ends 22b, 22d thereof.

More particularly, in a preferred embodiment, each laminar extension 22 has at least one thickness reduction at its proximal end 22b with respect to the fastening body 20 of the respective sector 19, so as to limit the amount of the minimum radial distance H and expand the inlet gap of the guide seat 21.

In addition or alternatively, it may be provided that each laminar extension 22 has at least one thickness reduction at a distal end 22d with respect to the fastening body 20 of the respective sector 19, so as to facilitate the insertion and sliding thereof within the guide seat 21, promoting the continuity and regularity of the circumferential development of the deposition surface S. The fastening body 20 and the laminar extension 22 of each sector 19 may be made as a single monolithic piece, integrating the guide seat 21, advantageously obtainable by an additive production process, for example by means of a fused deposition modelling (FDM) of a suitable polymeric material, preferably polyetherimide.

At least at the deposition surface S of the drum, each sector 19 may have an anti-stick surface with a low friction coefficient, for example a PTFE-based coating or other suitable material, to facilitate the sliding of the laminar extensions 22 in the respective guide seats 21.

The driving devices 28 are configured to translate the sectors 19 away from the central core 14 from a contracted position towards an expanded position, and vice versa.

The driving devices 28 comprise, for each sector 19, at least one pusher 29 slidably guided in radial direction with respect to the central core 14. More particularly, the pusher 29 may be slidably guided with respect to at least one guide element 30 extending radially from the central core 14. In the illustrated example, a pair of pushers 29 is provided, interconnected with respective guide elements 30, is preferably provided for each sector 19, preferably by means of interconnecting slides 31. Each interconnecting slide 31 is telescopically engaged between the respective guide element 30 and the respective pusher 29. The guide elements 30 of the various sectors 19 may be fixed to a single support disc 32 integral with the tubular shaft 15 of the central core 14 and lying in the axial middle line plane E of the drum 1.

For each sector 19, a pair of actuating levers 33 is also provided, operatively connected on axially opposite sides each with one of the slides 18 and the respective pusher 29.

In the illustrated example, each actuating lever 33 has a first end 33a constrained to at least one attachment bracket 34 carried in an axially outer position by the respective pusher 29, and a second end 33b rotatably engaged at a hinging bracket 35 carried by the respective slider 18.

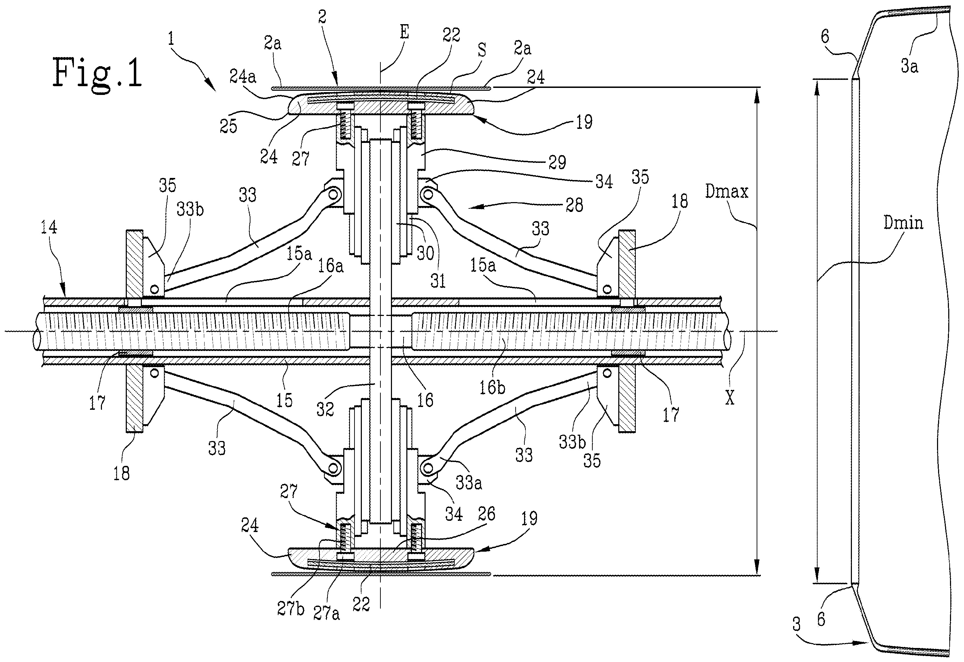

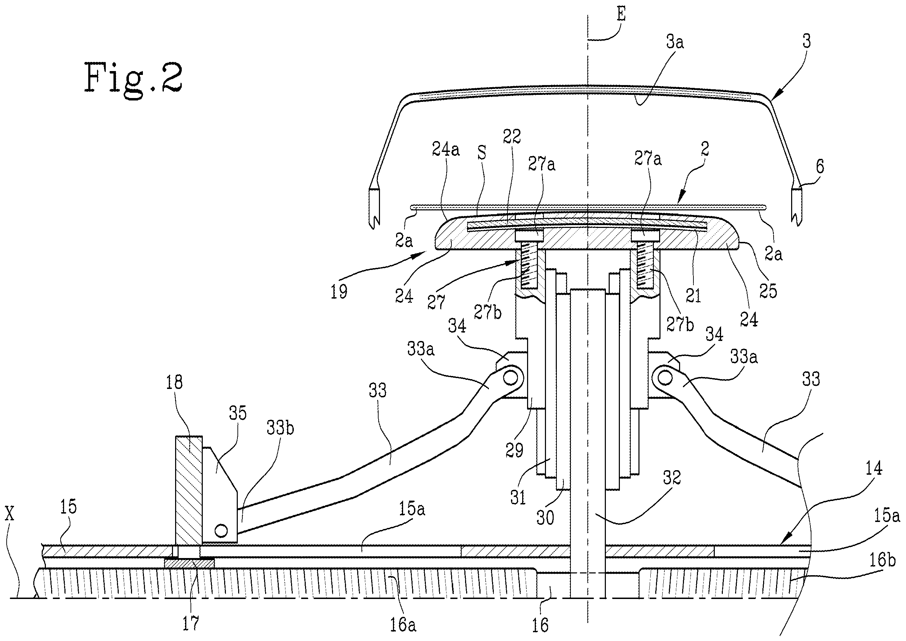

A process for applying the self-sealing sleeve or other semi-finished product 2 within the tyre 3, which can be implemented by means of the drum 1, provides that the drum itself is arranged in a radially contracted condition as in figures 1 and 2. In this condition, the sectors 19 are in the contracted position, with the pushers 29 approached to the central core 14 of the drum 1. The fastening bodies 20 of the sectors 19 are consequently positioned circumferentially with respect to each other, with the respective laminar extensions 22 fully inserted each in the guide seat 21 of the circumferentially adjacent sector 19, so that the deposition surface S remains substantially continuous.

Depending on the conformation given to the sectors 19, the deposition surface S of the drum 1 may have a substantially cylindrical conformation or, if required, suitably convex according to an arched transverse profile with preferably continuous pattern, substantially conforming to the radially inner surface 3a of the tyre 3 in which the semi-finished product 2 must be applied.

The drum 1 in the contracted condition lends itself to receive the semi-finished product 2, the self-sealing sleeve in the described example, which is applied around the deposition surface S.

For this purpose, the self-sealing sleeve or other semi-finished product 2 may be made directly on the drum 1, for example by applying successively around the deposition surface S the annular sealing inserts 13, the protective film 12 and the layer of self-sealing material 11.

Alternatively, the components of the semi-finished product 2 may be pre-assembled and then applied around the deposition surface S. At least in the latter case, it may be provided that the axially outer edges 2a of the semi-finished product 2 project cantilevering from axially opposite sides with respect to the drum 1, as illustrated in figures 1, 2 and 3.

The maximum outer diameter Dmax of the drum 1 in said radially contracted condition may advantageously be set from time to time according to certain geometric parameters of the tyre 1 being processed, for example as a function of the fitting diameter. More particularly, it is preferably provided that in the contracted condition, the maximum outer diameter Dmax of the drum 1, including the size of the semi-finished product 2, is less than a minimum inner diameter Dmin of the tyre 3, which may be identified at the anchoring portions 6.

The drum 1 carrying the semi-finished product 2 is therefore suitable to be inserted axially within the tyre 3, as in figure 2, preferably so as to place the semi-finished product in a coaxial position and axially centred with respect to the tyre 3 itself. In this case, the axial middle line plane of the drum coincides with that of the tyre 1.

Then, a radial expansion of the drum 1 is started, so that the semi-finished product 2 is brought to adhere against the radially inner surface 3a of the tyre 3.

For this purpose, by means of an actuator not shown, the control screw 16 is rotated inside the tubular shaft 15. The consequent reciprocal approach of the sliders 18 determines, through the actuating levers 33, a radial displacement of the pushers 29 along the respective guide elements 30. The sectors 19 move radially away from the geometric axis X of the drum 1 together with the pushers 29, imposing a radial expansion to the semi-finished product 2 and a consequent circumferential elongation. The semi-finished product 2 may oppose a certain resistance to the expansion, which at least in the expanded condition generates centripetal thrust actions. However, these actions are counteracted, at least in part, by the elastic deformation preload of the laminar extensions 22. In fact, as mentioned above, the end portions 23 of the laminar extensions 22 resiliently press against the respective guide seats 21 by pushing the sectors 19 radially outwardly, so as to facilitate the expansion of the drum. The sectors 19 therefore move integrally with the pusher 29, overcoming the reaction exerted by the semi-finished product 2, until it is brought into contact with the radially inner surface 3a of the tyre 3.

During the radial expansion, the laminar extensions 22 are progressively extracted each from the respective guide seat 21, so as to support the increase in circumferential development of the drum 1 while maintaining the continuity of development of the deposition surface S. In fact, upon reaching the expanded condition, the end portions 23 remain engaged each within the respective guide seat 21, without the laminar extensions 22 extracting completely from them. Therefore, the deposition surface S, while increasing its diameter and circumferential development, maintains its continuous development substantially unaltered along the entire excursion between the contracted condition and the expanded condition.

The anti-stick surface with a low friction coefficient arranged on sectors 19 favours the sliding of the laminar extensions 22 inside the guide seats 21, as well as the possible reciprocal sliding between the semi-finished product 2 and the radially outer surfaces 20a, 22a of the sectors 19 themselves.

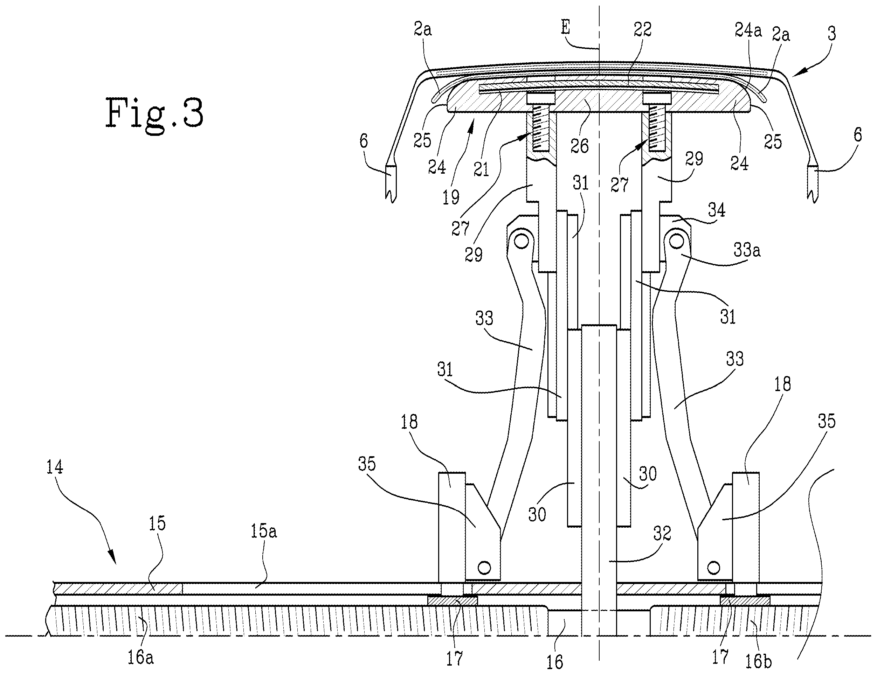

The semi-finished product 2 is thus applied against the radially inner surface 3a of the tyre 3, with a radial thrust action towards the outside, distributed according to the entire circumferential development of the semi-finished product itself (figure 3).

This circumstance favours an effective expulsion of the air present between the semi-finished product 2 and the tyre 3, improving their mutual adhesion.

The curvilinear profile of the connecting portions 24 of the sectors 19 prevents the application of excessive localised stresses which could damage the semi-finished product 2.

At the end of the application, with an actuation of the driving screw 16 in the opposite direction to that used for the expansion of the drum 1, the contraction thereof is determined with an inverse cycle with respect to that previously described. The deposition surface S of the drum 1 is separated from the semi-finished product 2, which adheres to the radially inner surface 3a of the tyre 3.

Upon reaching the radially contracted condition, the drum 1 may be axially extracted from the tyre 3.

The axially outer flaps 2a of the semi-finished product 2, especially if projecting cantilevered with respect to the drum 1, may subsequently be subjected to a rolling operation or other additional process suitable for promoting adhesion of the annular sealing inserts 13 and the parts adjacent to them against the inner surface of the tyre 3.

## Claims

1. Drum (1) for the application of semi-finished products within tyres for vehicle wheels, comprising:
a central support core (14) defining a geometric axis (X) of the drum (1);
a plurality of sectors (19) distributed along a circumferential direction around said geometric axis (X);
driving devices (28) operating between the central core (14) and each sector (19) in order to cause a radial translation of the sectors (19) moving away from the central core (14) from a contracted position, in which said sectors (19) define a substantially continuous radially outer deposition surface (S), towards an expanded position;
wherein each sector (19) has a fastening body (20) having a radially outer surface (20a) and coupling members (27) for coupling with said driving devices (28);
wherein said plurality of sectors (19) has:
guide seats, each made at the fastening body (20) of a respective sector (19), in radially inner position with respect to the radially outer surface (20a);
laminar extensions (22), each of which extends along said circumferential direction from the fastening body (20) of a respective sector (19) and has, on a side opposite to the fastening body (20), a terminal portion (23) slidably engaged through the guide seat (21) of one of the circumferentially contiguous sectors (19).

2. Drum as claimed in claim 1, wherein the laminar extension (22), in the absence of mechanical stresses, has a circumferential extension curved according to a radius greater than a radius of curvature of the deposition surface (S) in the expanded condition.

3. Drum as claimed in claim 1 or 2, wherein the laminar extension (22) is engaged in the respective guide seat (21) in a condition of elastic bending towards the geometric axis (X) of the drum (1).

4. Drum as claimed in one or more of the claims 1 to 3, wherein each laminar extension (22) has at least one thickness reduction at at least one of the circumferentially opposite ends (22b, 22d) thereof.

5. Drum as claimed in one or more of the claims 1 to 4, wherein each sector (19) has a pair of lateral expansions (24) defining respective axially opposite ends of the deposition surface (S) at the fastening body (20).

6. Drum as claimed in claim 5, wherein each guide seat (21) is axially delimited between the lateral expansions (24) of the respective fastening body (20).

7. Drum as claimed in one or more of the claim 5 or 6, wherein the fastening body (20) also has a base portion (26) joined at respectively opposite ends to the lateral expansions (24).

8. Drum as claimed in claim 7, wherein the base portion (26) extends in a radially inner position with respect to the laminar extension (22).

9. Drum as claimed in claim 7 or 8, wherein each guide seat (21) is defined between said base portion (26) and a radially inner surface of the respective laminar extension (22).

10. Drum as claimed in one or more of the claims 7 to 9, wherein said coupling members (27) operate at the base portion (26).

11. Drum as claimed in one or more of the claims 1 to 10, wherein the fastening body (20) and the laminar extension (22) of each sector (19) are made of a single monolithic piece, integrating said guide seat (21).

12. Process for applying a semi-finished product within a tyre comprising:
arranging, in a radially contracted condition, a drum (1) having a radially outer deposition surface (S) defined by sectors (19) distributed along a circumferential direction around a geometric axis (X), wherein a maximum outer diameter (Dmax) of the drum (1) in said radially contracted condition is smaller than a minimum inner diameter (Dmin) of a tyre (3);
applying said semi-finished product (2) around the deposition surface (S) of the drum (1);
axially inserting, within the tyre (3), the drum (1) carrying the semi-finished product (2);
radially expanding the drum (1) up to a radially expanded condition in order to apply the semi-finished product (2) against a radially inner surface of the tyre (3);
wherein, in the radially contracted condition, said plurality of sectors (19) has laminar extensions (22) extending along said circumferential direction and each slidably inserted with a terminal portion (23) thereof through a guide seat (21) carried by one of the circumferentially contiguous sectors (19) in radially inner position with respect to the deposition surface (S);
wherein the action of radially expanding the drum (1) comprises slidably extracting the laminar extensions (22) from the respective guide seats (21) in order to maintain the deposition surface (S) according to a substantially continuous extension.

13. Process as claimed in claim 12, wherein during the radial expansion of the drum (1), the terminal portions (23) of the laminar extensions (22) exert a radially outwardly directed elastic thrust action.

14. Process as claimed in one or more of the claims 12 to 13, also comprising opposing centripetal thrust actions exerted by the semi-finished product (2) against the deposition surface (S) in the expanded condition, by means of the elastic thrust action exerted by the laminar extensions (22).

15. Process as claimed in one or more of the claims 12 to 14, wherein the semi-finished product (2) is applied against the radially inner surface of the tyre (3) with an outwardly directed radial thrust action, distributed according to the entire circumferential extension of a radially outer surface of the semi-finished product itself.

## Patentansprüche

1. Trommel (1) für die Anbringung halbfertiger Produkte innerhalb von Reifen für Fahrzeugräder, umfassend:
einen zentralen Trägerkern (14), der eine geometrische Achse (X) der Trommel (1) definiert;
eine Vielzahl von Sektoren (19), die entlang einer Umfangsrichtung um die geometrische Achse (X) herum verteilt sind;
Antriebsvorrichtungen (28), die zwischen dem zentralen Kern (14) und jedem Sektor (19) arbeiten, um eine radiale Verschiebung der Sektoren (19) zu veranlassen, die sich von dem zentralen Kern (14) aus einer kontrahierten Position, in welcher die Sektoren (19) eine im Wesentlichen durchgehende radial äußere Ablageoberfläche (S) bilden, zu einer expandierten Position weg bewegt;
wobei jeder Sektor (19) einen Befestigungskörper (20) mit einer radial äußeren Oberfläche (20a) und Kopplungselemente (27) zur Kopplung mit den Antriebsvorrichtungen (28) aufweist;
wobei die Vielzahl von Sektoren (19) aufweist:
Führungssitze, die jeweils an dem Befestigungskörper (20) eines jeweiligen Sektors (19), in einer radial inneren Position in Bezug auf die radial äußere Oberfläche (20a) gebildet sind;
laminare Erweiterungen (22), die sich jeweils entlang der Umfangsrichtung von dem Befestigungskörper (20) eines jeweiligen Sektors (19) erstrecken und auf einer dem Befestigungskörper (20) entgegengesetzten Seite einen Endabschnitt (23) aufweisen, mit welchem der Führungssitz (21) eines der in Umfangsrichtung angrenzenden Sektoren (19) in gleitend in Eingriff steht.

2. Trommel nach Anspruch 1, wobei die laminare Erweiterung (22) bei fehlenden mechanischen Belastungen eine Umfangserstreckung aufweist, die gemäß einem Radius gekrümmt ist, der größer ist als ein Krümmungsradius der Ablageoberfläche (S) in dem expandierten Zustand.

3. Trommel nach Anspruch 1 oder 2, wobei die laminare Erweiterung (22) mit dem jeweiligen Führungssitz (21) in einem Zustand der elastischen Biegung zu der geometrischen Achse (X) der Trommel (1) hin in Eingriff steht.

4. Trommel nach einem oder mehreren der Ansprüche 1 bis 3, wobei jede laminare Erweiterung (22) an zumindest einem der in Umfangsrichtung entgegengesetzten Enden (22b, 22d) davon zumindest eine Dickenverringerung aufweist.

5. Trommel nach einem oder mehreren der Ansprüche 1 bis 4, wobei jeder Sektor (19) ein Paar von seitlichen Erweiterungen (24) aufweist, die jeweilige axial entgegengesetzte Enden der Ablageoberfläche (S) an dem Befestigungskörper (20) definieren.

6. Trommel nach Anspruch 5, wobei jeder Führungssitz (21) axial zwischen den seitlichen Erweiterungen (24) des jeweiligen Befestigungskörpers (20) begrenzt ist.

7. Trommel nach einem oder mehreren von Anspruch 5 oder 6, wobei der Befestigungskörper (20) auch einen Basisabschnitt (26) aufweist, der an jeweils entgegengesetzten Enden der seitlichen Erweiterungen (24) angefügt ist.

8. Trommel nach Anspruch 7, wobei der Basisabschnitt (26) sich in einer radial inneren Position in Bezug auf die laminare Erweiterung (22) erstreckt.

9. Trommel nach Anspruch 7 oder 8, wobei jeder Führungssitz (21) zwischen dem Basisabschnitt (26) und einer radial inneren Oberfläche der jeweiligen laminaren Erweiterung (22) definiert ist.

10. Trommel nach einem oder mehreren der Ansprüche 7 bis 9, wobei die Kopplungselemente (27) auf den Basisabschnitt (26) wirken.

11. Trommel nach einem oder mehreren der Ansprüche 1 bis 10, wobei der Befestigungskörper (20) und die laminare Erweiterung (22) eines jeden Sektors (19) aus einem einzelnen monolithischen Stück hergestellt sind, das den Führungssitz (21) integriert.

12. Verfahren zum Aufbringen eines halbfertigen Produkts innerhalb eines Reifens, umfassend:
Anordnen, in einem radial kontrahierten Zustand, einer Trommel (1), die eine radial äußere Ablageoberfläche (S) aufweist, die durch Sektoren (19) definiert wird, die entlang einer Umfangsrichtung um eine geometrische Achse (X) herum verteilt sind, wobei ein maximaler äußerer Durchmesser (Dmax) der Trommel (1) in dem radial kontrahierten Zustand kleiner ist als ein minimaler innerer Durchmesser (Dmin) eines Reifens (3);
Anbringen des halbfertigen Produkts (2) um die radial äußere Oberfläche (S) der Trommel (1) herum;
axiales Einsetzen der Trommel (1), die das halbfertige Produkt (2) trägt, innerhalb des Reifens (3);
radiales Expandieren der Trommel (1) bis zu einem radial expandierten Zustand, um das halbfertige Produkt (2) gegen eine radial innere Oberfläche des Reifens (3) anzubringen;
wobei in dem radial kontrahierten Zustand die Vielzahl von Sektoren (19) laminare Erweiterungen (22) aufweist, die sich entlang der Umfangsrichtung erstrecken und jeweils gleitend in einen Endabschnitt (23) davon eingeführt sind, durch einen Führungssitz (21), der von einem der in Umfangsrichtung angrenzenden Sektoren (19) in einer radial inneren Position in Bezug auf die Ablageoberfläche (S) getragen wird;
wobei der Vorgang des radialen Expandierens der Trommel (1) das gleitende Herausziehen der laminaren Erweiterungen (22) aus den jeweiligen Führungssitzen (21) umfasst, um die Ablageoberfläche (S) in Übereinstimmung mit einer im Wesentlichen durchgehenden Erstreckung zu halten.

13. Verfahren nach Anspruch 12, wobei während der radialen Expansion der Trommel (1) die Endabschnitte (23) der laminaren Erweiterungen (22) eine radial nach außen gerichtete elastische Schubwirkung ausüben.

14. Verfahren nach einem oder mehreren der Ansprüche 12 bis 13, ebenfalls umfassend entgegengesetzte zentripetale Schubwirkungen, die durch das halbfertige Produkt (2) gegen die Ablageoberfläche (S) in dem expandierten Zustand ausgeübt werden, mittels der elastischen Schubwirkung, die von den laminaren Erweiterungen (22) ausgeübt wird.

15. Verfahren nach einem oder mehreren der Ansprüche 12 bis 14, wobei das halbfertige Produkt (2) gegen die radial innere Oberfläche des Reifens (3) mit einer nach außen gerichteten radialen Schubwirkung aufgebracht wird, verteilt in Übereinstimmung mit der gesamten Umfangserstreckung einer radial äußeren Oberfläche des halbfertigen Produkts selbst.

## Revendications

1. Tambour (1) pour l'application de produits semifinis dans des pneus pour roues de véhicules, comprenant :
un noyau de support central (14) définissant un axe géométrique (X) du tambour (1) ;
une pluralité de secteurs (19) répartis le long d'une direction circonférentielle autour dudit axe géométrique (X) ;
des dispositifs d'entraînement (28) fonctionnant entre le noyau central (14) et chaque secteur (19) pour provoquer une translation radiale des secteurs (19) en s'éloignant du noyau central (14) à partir d'une position contractée, dans laquelle lesdits secteurs (19) définissent une surface de dépôt radialement extérieure sensiblement continue (S), vers une position étendue ;
dans lequel chaque secteur (19) a un corps de fixation (20) ayant une surface radialement extérieure (20a) et des éléments de couplage (27) pour un couplage avec lesdits dispositifs d'entraînement (28) ;
dans lequel ladite pluralité de secteurs (19) a :
des sièges de guidage, réalisés chacun au niveau du corps de fixation (20) d'un secteur respectif (19), dans une position radialement intérieure par rapport à la surface radialement extérieure (20a) ;
des prolongements laminaires (22), dont chacun s'étend le long de ladite direction circonférentielle à partir du corps de fixation (20) d'un secteur respectif (19) et a, sur un côté opposé au corps de fixation (20), une partie terminale (23) engagée en coulissement à travers le siège de guidage (21) de l'un des secteurs circonférentiellement contigus (19).

2. Tambour tel que revendiqué dans la revendication 1, dans lequel le prolongement laminaire (22), en l'absence de contraintes mécaniques, présente un prolongement circonférentiel courbé selon un rayon supérieur à un rayon de courbure de la surface de dépôt (S) à l'état étendu.

3. Tambour tel que revendiqué dans la revendication 1 ou 2, dans lequel le prolongement laminaire (22) est engagé dans le siège de guidage respectif (21) dans une condition de flexion élastique vers l'axe géométrique (X) du tambour (1) .

4. Tambour tel que revendiqué dans une ou plusieurs des revendications 1 à 3, dans lequel chaque prolongement laminaire (22) a au moins une réduction d'épaisseur au niveau d'au moins l'une de ses extrémités circonférentiellement opposées (22b, 22d).

5. Tambour tel que revendiqué dans une ou plusieurs des revendications 1 à 4, dans lequel chaque secteur (19) a une paire d'extensions latérales (24) définissant des extrémités axialement opposées respectives de la surface de dépôt (S) au niveau du corps de fixation (20).

6. Tambour tel que revendiqué dans la revendication 5, dans lequel chaque siège de guidage (21) est délimité axialement entre les extensions latérales (24) du corps de fixation respectif (20).

7. Tambour tel que revendiqué dans une ou plusieurs des revendications 5 et 6, dans lequel le corps de fixation (20) a également une partie de base (26) assemblée au niveau d'extrémités respectivement opposées aux extensions latérales (24).

8. Tambour tel que revendiqué dans la revendication 7, dans lequel la partie de base (26) s'étend dans une position radialement intérieure par rapport au prolongement laminaire (22).

9. Tambour tel que revendiqué dans la revendication 7 ou 8, dans lequel chaque siège de guidage (21) est défini entre ladite partie de base (26) et une surface radialement intérieure du prolongement laminaire respectif (22).

10. Tambour tel que revendiqué dans une ou plusieurs des revendications 7 à 9,
dans lequel lesdits éléments de couplage (27) fonctionnent au niveau de la partie de base (26).

11. Tambour tel que revendiqué dans une ou plusieurs des revendications 1 à 10, dans lequel le corps de fixation (20) et le prolongement laminaire (22) de chaque secteur (19) sont réalisés en une seule pièce monolithique, intégrant ledit siège de guidage (21).

12. Procédé d'application d'un produit semi-fini dans un pneu comprenant le fait :
d'agencer, dans un état radialement contracté, un tambour (1) ayant une surface de dépôt radialement extérieure (S) définie par des secteurs (19) répartis le long d'une direction circonférentielle autour d'un axe géométrique (X), où un diamètre extérieur maximal (Dmax) du tambour (1) dans ledit état radialement contracté est plus petit qu'un diamètre intérieur minimal (Dmin) d'un pneu (3) ;
d'appliquer ledit produit semi-fini (2) autour de la surface de dépôt (S) du tambour (1) ;
d'insérer axialement, dans le pneu (3), le tambour (1) portant le produit semi-fini (2) ;
d'étendre radialement le tambour (1) jusqu'à un état radialement étendu afin d'appliquer le produit semi-fini (2) contre une surface radialement intérieure du pneu (3) ;
dans lequel, dans l'état radialement contracté, ladite pluralité de secteurs (19) a des prolongements laminaires (22) s'étendant le long de ladite direction circonférentielle et chacun inséré en coulissement avec une partie terminale (23) de celui-ci à travers un siège de guidage (21) porté par l'un des secteurs circonférentiellement contigus (19) en position radialement intérieure par rapport à la surface de dépôt (S) ;
dans lequel l'action d'extension radiale du tambour (1) comprend l'extraction en coulissement des prolongements laminaires (22) des sièges de guidage respectifs (21) afin de maintenir la surface de dépôt (S) selon un prolongement sensiblement continu.

13. Procédé tel que revendiqué dans la revendication 12, dans lequel lors de l'extension radiale du tambour (1), les parties terminales (23) des prolongements laminaires (22) exercent une action de poussée élastique dirigée radialement vers l'extérieur.

14. Procédé tel que revendiqué dans une ou plusieurs des revendications 12 et 13, comprenant également des actions de poussée centripète opposées exercées par le produit semi-fini (2) contre la surface de dépôt (S) à l'état étendu, au moyen de l'action de poussée élastique exercée par les prolongements laminaires (22).

15. Procédé tel que revendiqué dans une ou plusieurs des revendications 12 à 14, dans lequel le produit semi-fini (2) est appliqué contre la surface radialement intérieure du pneu (3) avec une action de poussée radiale dirigée vers l'extérieur, répartie selon tout le prolongement circonférentiel d'une surface radialement extérieure du produit semi-fini lui-même.
